# EUROPÄISCHE PATENTSCHRIFT

(11) **EP 2 801 453 B1**
(45) Veröffentlichungstag und Bekanntmachung des Hinweises auf die Patenterteilung: **13.03.2019**
(21) Anmeldenummer: 14167504.1
(22) Anmeldetag: 08.05.2014
(51) Int. Cl.: B25J 17/02

(54) **Ausgleichsvorrichtung**
Compensation device
Dispositif de compensation

(30) Priorität: 10.05.2013 DE 102013208635
(43) Veröffentlichungstag der Anmeldung: 12.11.2014
(73) Patentinhaber: Schunk GmbH & Co. KG Spann- und Greiftechnik, 74348 Lauffen am Neckar (DE)
(72) Erfinder: Becker, Ralf, 71672 Marbach (DE); Hauber, Rahel, 74343 Sachsenheim (DE)
(74) Vertreter: DREISS Patentanwälte PartG mbB

(56) Entgegenhaltungen:
- EP-A1- 0 307 550
- DE-A1- 3 821 548
- DE-A1- 3 928 971
- DE-U1- 9 104 307
- US-A- 4 669 192

## Beschreibung

Die Erfindung betrifft eine Ausgleichsvorrichtung, insbesondere eine Ausgleichseinheit zur Anordnung zwischen einen Roboterflansch und einem Aktuator. Als Aktuator kommt dabei beispielsweise ein am Roboterflansch befestigter Greifer in Frage.

In der Montage, d. h. beispielsweise beim Zusammenfügen von einzelnen Bauteilen oder beispielsweise beim Einlegen von Werkstücken in dafür vorgesehene Aussparungen ist es in der Automatisierungstechnik oftmals notwendig, Ungenauigkeiten auszugleichen. Dabei sollen vorzugsweise Ungenauigkeiten in alle drei Raumrichtungen ausgeglichen werden.

Mit den aus dem Stand der Technik bekannten Ausgleichsvorrichtungen, wie beispielsweise in der DE 38 21 548 A1 offenbart, ist dies jedoch nur unter erheblichem Kosten- und Materialaufwand möglich. Diese aus dem Stand der Technik bekannten Ausgleichsvorrichtungen sind überwiegend aus Metall hergestellt und weisen sehr viele Bauteile auf. Dies macht die Ausgleichsvorrichtungen zum einen sehr schwer, groß, und zum anderen sehr teuer. Aufgrund des großen Gewichts können die Ausgleichsvorrichtungen unerwünschte Kräfte auf den Roboterarm, an welchem sie befestigt sind, ausüben.

Die vorliegende Erfindung stellt sich daher die Aufgabe, eine Ausgleichsvorrichtung, insbesondere eine Ausgleichseinheit zur Anordnung zwischen einem Roboterflansch und einem Aktuator bereitzustellen, welche einerseits kostengünstig herstellbar sein soll und dennoch funktionssicher arbeiten soll.

Diese Aufgabe wird mit einer Ausgleichsvorrichtung mit den Merkmalen des Anspruchs 1 gelöst. Eine solche Ausgleichsvorrichtung weist ein Grundteil und ein Befestigungsteil auf, wobei das Befestigungsteil in Bezug auf das Grundteil in Richtung einer Mittellängsachse der Vorrichtung axial verlagerbar ist und wobei das Befestigungsteil einen Bodenabschnitt und einen Befestigungsabschnitt aufweist, wobei der Befestigungsabschnitt derart mit dem Bodenabschnitt verbunden ist, dass der Befestigungsabschnitt in Bezug auf das Grundteil senkrecht zur Mittellängsachse der Vorrichtung radial verlagerbar ist, wobei am Befestigungsteil wenigstens ein mit Druck, insbesondere mit Druckluft beaufschlagbarer Druckraum derart vorgesehen ist, dass der Befestigungsabschnitt bei mit Druck beaufschlagtem Druckraum in Bezug auf das Grundteil senkrecht zur Mittellängsachse der Vorrichtung radial arretiert ist.

Eine solche Ausgleichsvorrichtung kann somit in vorteilhafter Weise ermöglichen, dass Ungenauigkeiten, welche beispielsweise beim Greifen eines Werkstücks auftreten können, ausgeglichen werden können. Das Grundteil kann dabei vorzugsweise am Roboterarm an einem Roboterflansch befestigt sein, wohingegen das Befestigungsteil, insbesondere am Befestigungsabschnitt an einem Aktuator, beispielsweise an einem Robotergreifer, befestigt sein kann. Es ist jedoch auch eine umgekehrte Befestigung denkbar. Aufgrund der axialen Verlagerbarkeit des Befestigungsteils gegenüber dem Grundteil kann ein Ausgleich von Ungenauigkeiten in Richtung der Mittellängsachse der Vorrichtung gewährleistet werden. Da der Befestigungsabschnitt außerdem derart mit dem Bodenabschnitt verbunden ist, dass der Befestigungsabschnitt in Bezug auf das Grundteil radial, d. h. senkrecht zur Mittellängsachse der Vorrichtung verlagerbar ist, kann auch ein Ausgleich von Ungenauigkeiten in einer Ebene senkrecht zur Mittellängsachse, d. h. radial, erfolgen. Im Falle der Beaufschlagung des Druckraums mit Druckluft kann eine Verlagerung in radialer Richtung, d. h. in einer Ebene senkrecht zur Mittellängsachse, nicht mehr erfolgen. Der Befestigungsabschnitt wird dadurch in Bezug auf das Grundteil radial arretiert bzw. radial festgesetzt.

Die Vorrichtung ist vorzugsweise dosenartig aufgebaut. Dabei ist es besonders vorteilhaft, wenn das Grundteil kreiszylindrisch mit einem Boden und einseitig offen ausgebildet ist. Das Befestigungsteil kann dabei zumindest bereichsweise, vorzugsweise größtenteils im Grundteil angeordnet sein. Vorzugsweise ist der Bodenabschnitt dabei parallel zu einem Boden des Grundteils angeordnet. Damit kann die Ausrichtung des Aktuators gegenüber dem Roboterflansch erleichtert werden.

Weiterhin sind erfindungsgemäß am Befestigungsteil im Bereich des Druckraums Sperrabschnitte derart vorgesehen, dass die Sperrabschnitte bei mit Druck beaufschlagtem Druckraum in mit den Sperrabschnitten korrespondierende Gegensperrabschnitte einrücken. Insbesondere kommen die Sperrabschnitte und die Gegensperrabschnitte dabei derart in Eingriff, dass der Befestigungsabschnitt in Bezug auf das Grundteil zumindest radial, d.h. quer zur Mittellängsachse der Vorrichtung arretiert ist. Die Sperrabschnitte sind dabei vorzugsweise als Vorsprünge ausgebildet, wohingegen die Gegensperrabschnitte vorzugsweise als Ausnehmungen ausgebildet sind. Es ist jedoch auch denkbar, die Sperrabschnitte als Ausnehmungen und die Gegensperrabschnitte als Vorsprünge auszubilden. Vorzugsweise wirken die Sperrabschnitte bei nicht druckbeaufschlagtem Druckraum nicht mit den Gegensperrabschnitten zusammen.

Ferner sind die Sperrabschnitte erfindungsgemäß jeweils auf der dem Druckraum abgewandten Seite eines den Druckraum begrenzenden Wandungsabschnitts angeordnet. Dadurch kann eine direkte Krafteinleitung ausgehend vom Druckraum in die Sperrabschnitte erfolgen. Eine Verlagerung der Sperrabschnitte durch Druckbeaufschlagung des Druckraums kann insbesondere dadurch erfolgen, dass ein den Druckraum begrenzender Wandungsabschnitt aufgrund des hohen Drucks verformt wird. Durch diese Verformung des Wandungsabschnitts kann eine Verlagerung der Sperrabschnitte bei Druckbeaufschlagung des Druckraums erfolgen.

Weiterhin ist es vorteilhaft wenn die Sperrabschnitte zumindest bereichsweise konisch ausgebildet sind und wenn die Gegensperrabschnitte zumindest bereichsweise konisch ausgebildet sind. Bei Druckbeaufschlagung können die Sperrabschnitte in die Gegensperrabschnitte dabei derart einrücken, dass die Konizität der Sperrabschnitte und der Gegensperrabschnitte zu einer Zentrierung der Sperrabschnitte in den Gegensperrabschnitten führt.

Besonders bevorzugt ist dabei, wenn die Gegensperrabschnitte am Grundteil, insbesondere radial außen, angeordnet sind. Dabei kann durch das Einrücken der Sperrabschnitte in die Gegensperrabschnitte das Befestigungsteil im Grundteil arretiert bzw. gesperrt werden. Das Befestigungsteil kann folglich im Grundteil festgesetzt werden, so dass ein Ausgleich in axialer und in radialer Richtung verhindert wird.

Eine vorteilhafte Ausgestaltung der Vorrichtung sieht vor, dass als Druckraum mehrere, vorzugsweise drei radial nach außen angeordnete und radial nach außen wirkende Faltenbalgelemente vorgesehen sind. Die Faltenbalgelemente können dabei vorzugsweise axial zwischen dem Bodenabschnitt und dem Befestigungsabschnitt angeordnet sein. Vorzugsweise sind dabei drei Faltenbalgelemente in Draufsicht in einem Winkel von 120° zueinander angeordnet. Besonders bevorzugt ist dabei, wenn jeweils ein Sperrabschnitt am jeweiligen Faltenbalgelement angeordnet ist und sich vorzugsweise ebenfalls radial nach außen erstreckt in Richtung des jeweiligen Gegensperrabschnitts erstreckt.

Vorteilhafterweise ist koaxial zur Mittellängsachse eine kreiszylindrische Ausnehmung im Grundteil und im Befestigungsteil vorgesehen. Mit einer solchen auch als Mittendurchführung bekannten Ausnehmung kann eine Durchführung von elektrischen und / oder pneumatischen Anschlusskabeln ermöglicht werden.

Eine weitere vorteilhafte Ausgestaltung der Erfindung sieht vor, dass die Gegensperrabschnitte am Befestigungsteil jeweils auf der dem Druckraum zugewandten Seite am Bodenabschnitt und am Befestigungsabschnitt angeordnet sind. Dabei können die Sperrabschnitte bei Druckbeaufschlagung des Druckraums in die Gegensperrabschnitte derart einrücken, dass eine Versteifung des Befestigungsteils in radialer Richtung erfolgt. Das Befestigungsteil wird dabei jedoch nicht im Grundteil festgesetzt, das heißt, dass das Befestigungsteil bei in die Gegensperrabschnitte eingerückten Sperrabschnitten in axialer Richtung in Bezug auf das Grundteil verlagerbar bleibt. Folglich kann ein radiales Verlagern des Befestigungsteils gegenüber dem Grundteil verhindert werden, wobei gleichzeitig ein Längenausgleich in axialer Richtung ermöglicht bleibt.

Besonders bevorzugt ist dabei, wenn als Druckraum ein im Befestigungsteil zwischen Bodenabschnitt und Befestigungsabschnitt angeordnetes, in axialer Richtung wirkendes, insbesondere zumindest bereichsweise kreiszylindrisches Druckkissen vorgesehen ist. Das Druckkissen kann dabei vorzugsweise koaxial zur Mittellängsachse angeordnet sein. Besonders bevorzugt ist dabei, wenn sich die Sperrabschnitte am Druckkissen nach axial oben und axial unten, d.h. in Richtung der Mittellängsachse erstrecken. Wenn das Druckkissen mit Druckluft beaufschlagt wird, können die Sperrabschnitte in die Gegensperrabschnitte einrücken, wobei durch die Konizität der Sperrabschnitte bzw. der Gegensperrabschnitte eine Zentrierung erfolgen kann.

Eine weitere vorteilhafte Ausgestaltung der Erfindung sieht vor, dass das Befestigungsteil mittels sich radial nach außen erstreckender Federelemente mit dem Grundteil verbunden ist. Vorzugsweise sind dabei in radialer Richtung jeweils drei Federelemente vorgesehen. Diese Federelemente können in einem Winkel von 120° zueinander angeordnet sein. Durch das Vorsehen der Federelemente kann eine Verlagerbarkeit des Befestigungsteils gegenüber dem Grundteil in Richtung der Mittellängsachse, d. h. axial, ermöglicht werden. Vorzugsweise sind die Federelemente blattfederartig ausgebildet, d. h. die Federelemente sind in axialer Richtung biegeweich bzw. elastisch nachgiebig ausgebildet, wobei die Federelemente in radialer Richtung biegesteif, d. h. starr ausgebildet sein können.

Weiterhin ist es vorteilhaft, wenn die Federelemente unmittelbar mit dem Bodenabschnitt und im Bereich des Befestigungsabschnitts mittelbar durch einen konzentrisch zur Mittellängsachse der Vorrichtung mit dem Bodenabschnitt verbundenen Ringbundabschnitt mit dem Bodenabschnitt verbunden sind. Der Ringbundabschnitt kann dabei vorzugsweise durch den Druckraum zumindest bereichsweise glockenartig umgebende, mit dem Bodenabschnitt verbundene Streben, mit dem Bodenabschnitt verbunden sein. Die Streben sind dabei vorzugsweise starr, d. h. biegefest ausgebildet. Somit kann eine Lagerung des Befestigungsteils im Grundteil lediglich über den Bodenabschnitt derart erfolgen, dass der Bodenabschnitt einerseits im Bereich des Bodenabschnitts und andererseits im Bereich des Befestigungsabschnitts mit Federelementen am Grundteil befestigt ist. Vorzugsweise weist die Vorrichtung daher insgesamt sechs Federelemente auf, wobei jeweils zwei Federelemente in axialer Richtung übereinander angeordnet sind.

Eine weitere vorteilhafte Ausgestaltung der Vorrichtung sieht vor, dass der Bodenabschnitt mit dem Befestigungsabschnitt durch mehrere, vorzugsweise wenigstens drei, weiter vorzugsweise durch sechs in axialer Richtung zwischen dem Bodenabschnitt und dem Befestigungsabschnitt verlaufende Stabelemente verbunden ist. Die Stabelemente können dabei vorzugsweise gleichmäßig verteilt angeordnet sein. Dabei ist es besonders vorteilhaft, wenn die Stabelemente in Draufsicht in einem Winkel von 120° bei drei Stabelementen bzw. von 60° bei sechs Stabelementen zueinander angeordnet sind. Die Stabelemente können dabei im Querschnitt vorzugsweise rund, insbesondere kreisförmig ausgebildet sein.

Besonders bevorzugt ist dabei, wenn die Stabelemente in radialer Richtung zumindest bereichsweise biegeweich ausgebildet sind. Durch die biegeweiche Ausbildung der Stabelemente, sind diese in radialer Richtung elastisch bzw. nachgiebig. Dabei ist vorzugsweise vorgesehen, dass die Stabelemente in axialer Richtung steif ausgebildet sind. Durch in radialer Richtung zumindest bereichsweise biegeweiche Stabelemente kann eine Verlagerung des Befestigungsabschnitts gegenüber dem Grundteil ermöglicht werden, wenn der Druckraum nicht mit Druckluft beaufschlagt ist.

Vorteilhafterweise sind am Grundteil sich nach radial innen erstreckende, den Bodenabschnitt zumindest bereichsweise hintergreifende Vorsprünge angeordnet. Dabei ist es besonders bevorzugt wenn vorzugsweise drei Vorsprünge vorgesehen sind, die gleichmäßig im Grundteil verteilt angeordnet sind. Durch die Vorsprünge kann eine zu weite axiale Verlagerung des Befestigungsteils im Grundteil verhindert werden. Somit kann auch verhindert werden, dass die Federelemente plastisch verformt werden oder gar abbrechen.

Weiterhin ist es vorteilhaft, wenn der Druckraum mit einem am Befestigungsteil angeordneten, von einer Mantelfläche des Grundteils zugänglichen Druckluftanschluss pneumatisch verbunden ist. Somit kann ein Anschluss einer Druckluftzuführung von außen ermöglicht werden. Zur pneumatischen Verbindung können abhängig von der Ausgestaltung des Druckraums verschiedene Ausführungen von Druckluftkanälen vorgesehen sein, welche den Druckluftanschluss pneumatisch mit dem Druckraum, beispielsweise mit dem Druckkissen oder den Faltenbalgelementen verbinden.

Eine weitere vorteilhafte Ausgestaltung der Erfindung sieht vor, dass die Vorrichtung einstückig hergestellt ist.

Besonders bevorzugt ist dabei, wenn die Vorrichtung mittels eines generativen Fertigungsverfahrens hergestellt ist.

Weiterhin ist es vorteilhaft, wenn die Vorrichtung aus einem Kunststoff, vorzugsweise aus Polyamid hergestellt ist.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschreiben und erläutert sind.

Es zeigen:
Figur 1 eine erste Ausführungsform der erfindungsgemäßen Ausgleichsvorrichtung in Schrägansicht;
Figur 2 die Ausgleichsvorrichtung gemäß Figur 1 in einer Ansicht von unten;
Figur 3 einen Schnitt durch die Ausgleichsvorrichtung gemäß Figuren 1 und 2 entlang der Linie A-A;
Figur 4 einen Schnitt durch die Ausgleichsvorrichtung gemäß einer der Figuren 1 bis 3 entlang der Linie C-C in Figur 2;
Figur 5 einen Schnitt durch die Ausgleichsvorrichtung gemäß Figur 1 bis 4 entlang der Linie B-B gemäß Figur 2;
Figur 6 eine zweite Ausführungsform der erfindungsgemäßen Ausgleichsvorrichtung in Schrägansicht; Figur 7 eine Ansicht von unten auf die Ausgleichsvorrichtung gemäß Figur 6;
Figur 8 einen Schnitt durch die Ausgleichsvorrichtung gemäß Figur 6 und 7 entlang der Linie A-A gemäß Figur 7;
Figur 9 einen Schnitt durch die Ausgleichsvorrichtung gemäß Figur 6 bis 8 entlang der Linie C-C gemäß Figur 7; und
Figur 10 einen Schnitt durch die Ausgleichsvorrichtung gemäß Figur 6 bis 9 entlang der Linie B-B gemäß Figur 7.

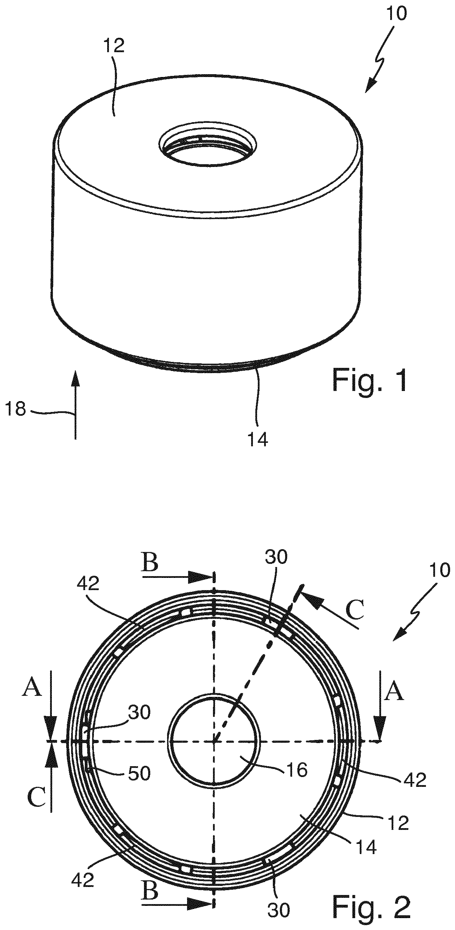

Die Figuren 1 bis 5 zeigen eine erste Ausführungsform einer erfindungsgemäßen Ausgleichsvorrichtung 10. Figur 1 zeigt die Ausgleichsvorrichtung 10 in einer Schrägansicht. Die Ausgleichsvorrichtung 10 umfasst einen Grundteil 12 und einen in Figur 1 im Grundteil fast vollständig angeordneten Befestigungsteil 14. Das Grundteil 12 und das Befestigungsteil 14 weisen jeweils eine als Mittendurchführung für elektrische oder pneumatische Anschlusskabel ausgebildete Ausnehmung 16 auf.

Figur 2 zeigt eine Ansicht von unten auf die Ausgleichsvorrichtung 10 gemäß Figur 1 bei Blick in Richtung des Pfeils 18. Das Grundteil 12 und das im Grundteil angeordnete Befestigungsteil 14 sind dabei zu erkennen. Ferner ist Figur 2 zu entnehmen, dass das Grundteil 12 kreiszylindrisch ausgebildet ist.

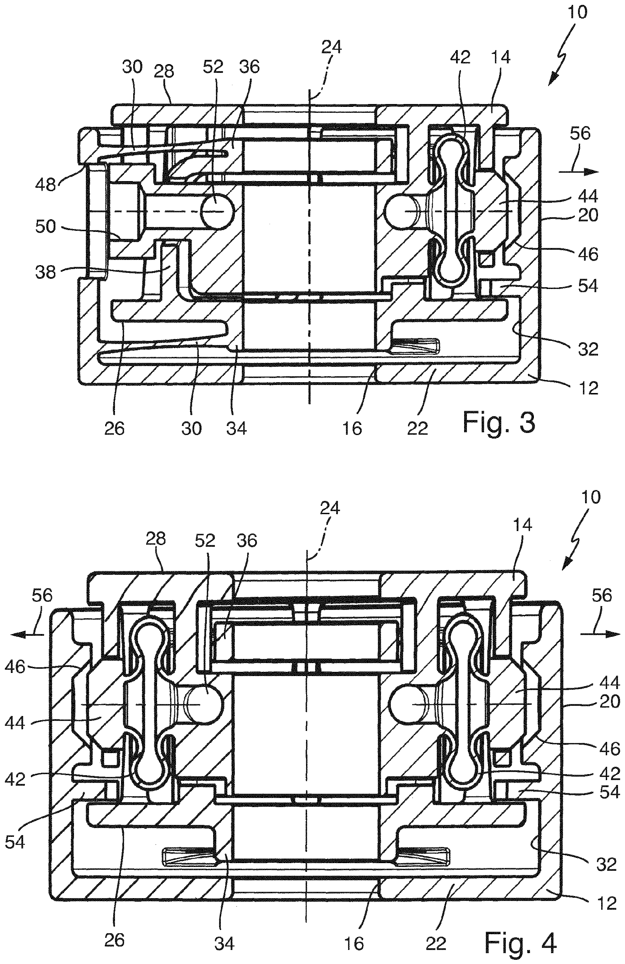

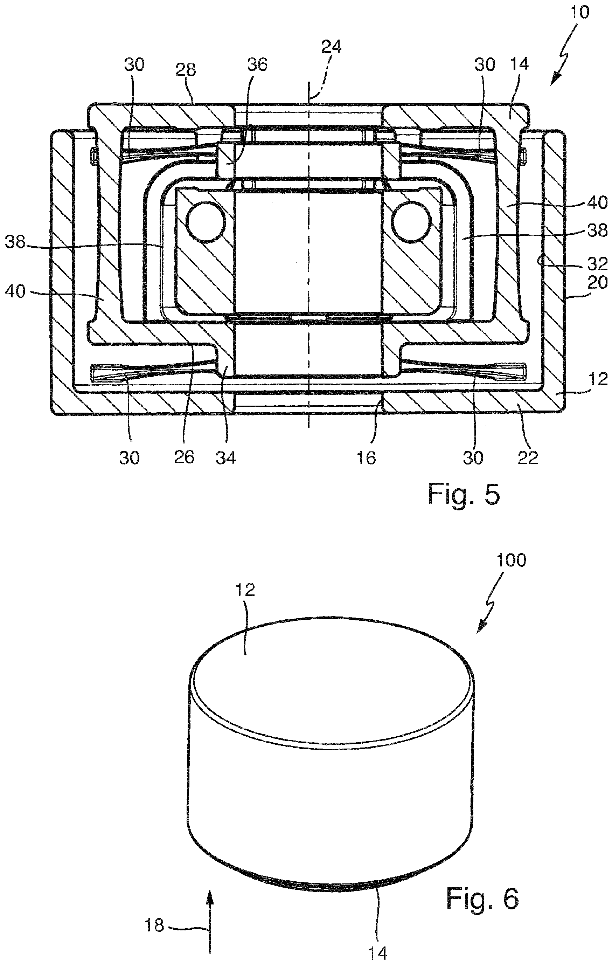

Figur 3 zeigt einen Schnitt durch die Ausgleichsvorrichtung 10 entlang der Linie A-A in Figur 2. Figur 4 zeigt einen Schnitt durch die Ausgleichsvorrichtung 10 entlang der Linie C-C in Figur 2, und Figur 5 zeigt einen Schnitt durch die Ausgleichsvorrichtung 10 entlang der Linie B-B in Figur 2.

Wie sich den Figuren 3 bis 5 deutlich entnehmen lässt, ist das Befestigungsteil 14 fast vollständig im Grundteil 12 angeordnet. Das Grundteil 12 ist dabei im Wesentlichen becher- oder dosenartig ausgebildet, d. h. es weist eine kreiszylindrische Mantelfläche 20 und einen Boden 22 auf. Das Grundteil 12 und das Befestigungsteil 14 weisen ferner die in den Figuren 3 bis 5 deutlich erkennbare Ausnehmung 16 auf, welche konzentrisch zu einer Mittellängsachse 24 der Ausgleichsvorrichtung 10 vorgesehen ist.

Das Befestigungsteil 14 umfasst einen als Ringkreisfläche ausgebildeten Bodenabschnitt 26 und einen ebenfalls als Ringkreisfläche ausgebildeten Befestigungsabschnitt 28. Zur Befestigung der Ausgleichsvorrichtung 10 kann diese mittels des Bodens 22 an einem nicht dargestellten Roboterflansch befestigt werden, wobei sie wiederum mittels des Befestigungsabschnitts 28 an einem Aktuator, beispielsweise an einem nicht dargestellten Robotergreifer, befestigt werden kann.

Wie sich insbesondere aus Figur 3 und Figur 5 entnehmen lässt, ist das Befestigungsteil 14 im Grundteil 12 durch Federelemente 30 an einer inneren Mantelfläche 32 des Grundteils 12 befestigt. Die Federelemente 30 sind dabei blattfederartig ausgebildet und erstrecken sich im Wesentlichen radial, d. h. senkrecht zur Mittellängsachse 24. In axialer Richtung, d. h. in Richtung der Mittellängsachse 24, sind jeweils zwei Federelemente 30 übereinander vorgesehen. Der Bodenabschnitt 26 ist einerseits an seinem dem Boden 22 zugewandten Ende an einem unteren Ringbund 34 durch die daran befestigten Federelemente 30 mit dem Grundteil 12 verbunden. Andererseits ist der Bodenabschnitt 26 im Bereich des Befestigungsabschnitts 28 mittelbar durch einen konzentrisch zur Mittellängsachse 24 angeordneten Ringbundabschnitt 36 mit dem Bodenabschnitt 26 verbunden. Dazu erstrecken sich vom Bodenabschnitt 26 in axialer Richtung glockenartig gebogene Streben 38, welche vorzugsweise biegefest, d. h. steif ausgebildet sind. Der Ringbundabschnitt 36 ist daher unnachgiebig mit dem Bodenabschnitt 26 verbunden. Deutlich ist der Bodenabschnitt 26 einerseits unmittelbar am unteren Ringbund 34 und andererseits mittelbar am Ringbundabschnitt 36 über die Federelemente 30, welche als Blattfedern ausgebildet sind, am Grundteil 12 befestigt ist. Die Federelemente 30 sind dabei in axialer Richtung entlang der Mittellängsachse 24 nachgiebig, bzw. biegeweich ausgebildet.

Wie insbesondere Figur 5 deutlich zu entnehmen ist, ist der Bodenabschnitt 26 mit dem Befestigungsabschnitt 28 durch insgesamt sechs zwischen dem Bodenabschnitt 26 und dem Befestigungsabschnitt 28 verlaufende Stabelemente 40 verbunden. Dabei sind die Stabelemente 40 in einem Winkel von etwa 60° zueinander angeordnet. Die Stabelemente 40 sind ferner in axialer Richtung starr und in radialer Richtung, d. h. quer zur Mittellängsachse 24 nachgiebig bzw. biegeweich ausgebildet.

Wie in Figur 3 und 4 deutlich zu erkennen ist, sind am Befestigungsteil 14 drei radial nach außen angeordnete Faltenbalgelemente vorgesehen. Die Faltenbalgelemente 42 sind dabei zwischen dem Bodenabschnitt 26 und dem Befestigungsabschnitt 28 angeordnet und in der Ansicht gemäß Figur 2 in einem Winkel von 120° zueinander angeordnet. Radial außen weisen die Faltenbalgelemente 42 konisch ausgebildete Sperrabschnitte 44 in Form eines Vorsprungs auf. Diese Sperrabschnitte 44 korrespondieren mit im Grundteil 12 vorgesehenen Gegensperrabschnitten 46.

Das Grundteil 12 weist wie in Figur 3 zu erkennen ist an seiner Mantelfläche 20 eine Ausnehmung 48 auf. Durch diese Ausnehmung 48 ist ein Druckluftanschluss 50, welcher am Befestigungsteil 14 vorgesehen ist und mit den Faltenbalgelementen 42 pneumatisch verbunden ist, von außen zugänglich. Die Faltenbalgelemente 42 sind dabei über einen Ringkanal 52 mit dem Druckluftanschluss 50 pneumatisch verbunden. Wie sich insbesondere Figur 4 entnehmen lässt, sind an der inneren Mantelfläche 33 des Grundteils 12 sich nach radial innen hin zur Mittellängsachse 24 erstreckende Vorsprünge 54 vorgesehen. Diese Vorsprünge 54 hintergreifen den Bodenabschnitt 26 des Befestigungsteils 14 zumindest teilweise.

Im Betrieb der Ausgleichsvorrichtung 10 ist diese mit dem Boden 22 beispielsweise an einem Roboterarm an dessen Roboterflansch befestigt, wohingegen der Befestigungsteil 14 der Ausgleichsvorrichtung 10 über den Befestigungsabschnitt 28 mit einem Aktuator, beispielsweise einem Robotergreifer, verbunden ist. Wenn nun Werkstücke oder Bauteile gegriffen werden sollen, können Ungenauigkeiten mithilfe der Ausgleichsvorrichtung 10 ausgeglichen werden. Dazu kann einerseits das Befestigungsteil 14, welches im Grundteil 12 über die axial biegeweichen Federelemente 30 befestigt ist, in axialer Richtung ausweichen. Darüber hinaus ermöglicht die Verbindung des Befestigungsabschnitts 28 mit dem Bodenabschnitt 26 über die in axialer Richtung steifen, jedoch in radialer Richtung, d. h. quer zur Mittellängsachse 24 biegeweichen bzw. nachgiebigen Stabelemente, dass der Befestigungsabschnitt 28 radial gegenüber dem Grundteil 12 verlagerbar ist. Somit können Ungenauigkeiten beim Greifen von Werkstücken oder Bauteilen zwischen Robotergreifer und Roboterarm in x, y und z-Richtung ausgeglichen werden.

Der untere Ringbund 34 wirkt dabei als Anschlag gegenüber dem Boden 22 und verhindert somit eine zu weite Verlagerung des Befestigungsteils 14 gegenüber dem Grundteil 12 in axialer Richtung nach unten.

Bei am Druckluftanschluss angeschlossener, in den Figuren nicht dargestellter, Druckluftleitung können die Faltenbalgelemente 42 mit Druckluft beaufschlagt werden. Bei Beaufschlagung der Faltenbalgelemente 42 mit Druckluft weichen die Sperrabschnitte 44 in Richtung der Pfeile 56 nach radial außen aus und rücken dabei in die Gegensperrabschnitte 46 des Grundteils 12 ein. Durch die konische Ausbildung der Sperrabschnitte 44 bzw. der Gegensperrabschnitte 46 erfolgt dabei gleichzeitig eine Zentrierung. Wenn die Sperrabschnitte 44 in die Gegensperrabschnitten 46 eingerückt sind, ist das Befestigungsteil 14 im Grundteil 12 vollständig arretiert. Zum einen wird dann eine Verlagerung des Befestigungsabschnitts 28 gegenüber dem Grundteil 12 in radialer Richtung durch die Faltenbalgelemente 42 verhindert. Zum anderen wird dann auch eine Verlagerung des gesamten Befestigungsteils 14, welches bei in die Gegensperrabschnitte 46 eingerückten Sperrabschnitten 44 im Grundteil 12 arretiert ist, verhindert.

Somit kann mit der Ausgleichsvorrichtung 10 zum einen ein Ausgleich von Ungenauigkeiten zwischen einem Roboterarm und einem Robotergreifer bereitgestellt werden, wohingegen die Ausgleichsvorrichtung 10 bei Beaufschlagung der Faltenbalgelemente 42 mit Druckluft im Wesentlichen steife Verbindungen zwischen einem Roboterarm und einem Robotergreifer bzw. Aktuator bereitstellen kann.

Die Figuren 6 bis 10 zeigen eine zweite Ausführungsform der erfindungsgemäßen Ausgleichsvorrichtung 100. Die den Figuren 1 bis 5 entsprechenden Bauteile, Abschnitte und Elemente sind mit den entsprechenden Bezugszeichen gekennzeichnet.

Figur 6 zeigt eine zweite Ausführungsform der Ausgleichsvorrichtung 100. Der Grundteil 12 ist dabei mit dem im Grundteil 12 angeordneten Befestigungsteil 14 dargestellt.

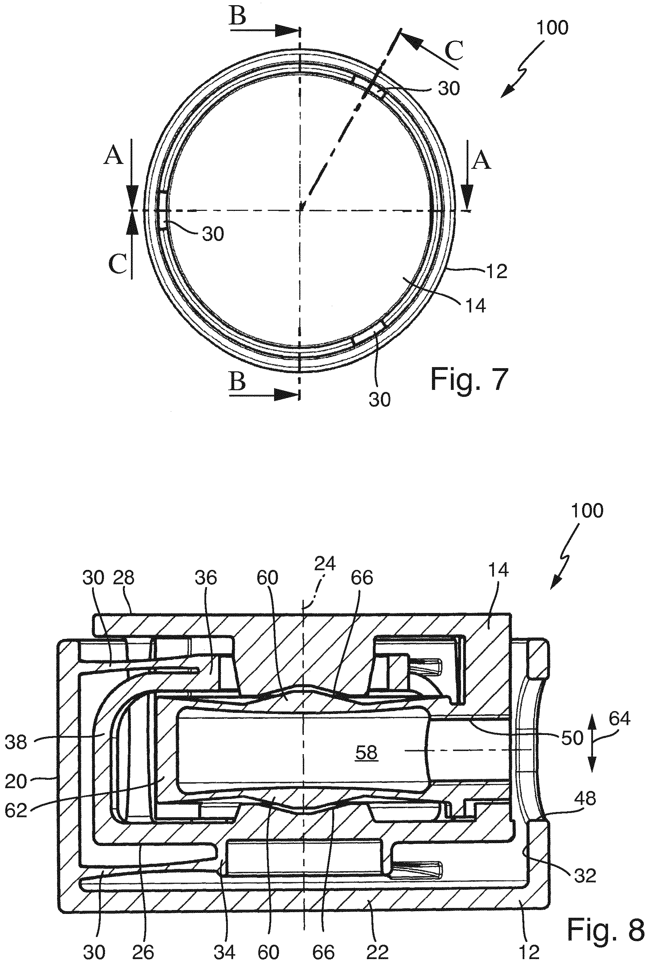

Figur 7 zeigt eine Ansicht von unten auf die Ausgleichsvorrichtung 100 gemäß Figur 6 entlang des Pfeils 18. Das Grundteil 12, das Befestigungsteil 14, sowie die Federelemente 30 sind in Figur 7 zu erkennen.

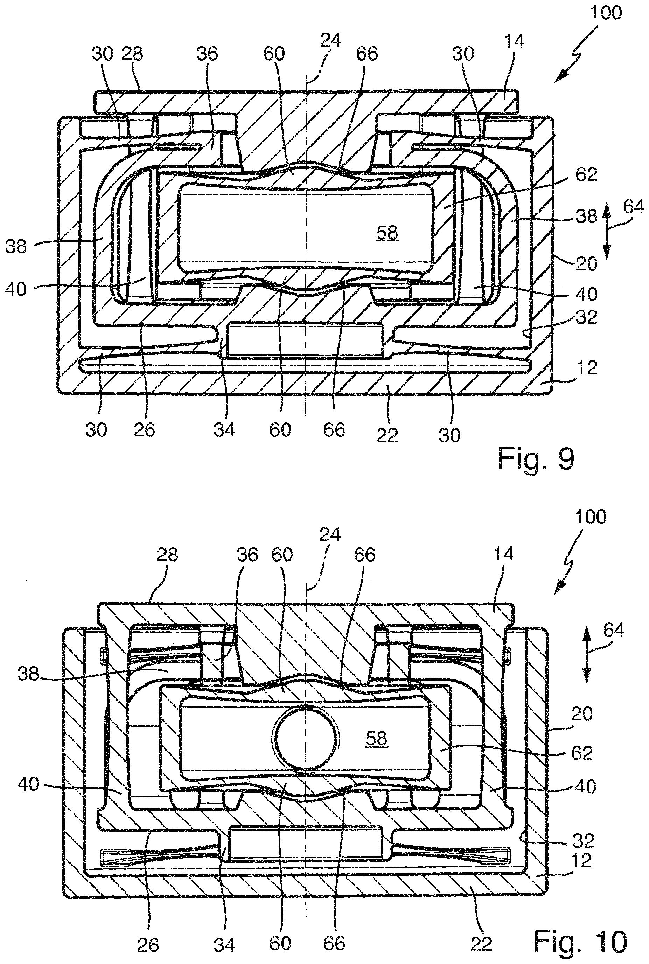

Figur 8 zeigt einen Schnitt durch die Ausgleichsvorrichtung 100 entlang der Linie A-A gemäß Figur 7. Figur 9 zeigt einen Schnitt durch die Ausgleichsvorrichtung 100 entlang der Linie C-C gemäß Figur 7. Figur 10 zeigt einen Schnitt durch die Ausgleichsvorrichtung 100 entlang der Linie B-B gemäß Figur 7. Auch die Ausgleichsvorrichtung weist einen becherartig ausgebildeten Grundteil 12 auf, bei dem sich eine zylinderförmige Mantelfläche 20 von einem Boden 22 axial nach oben in Richtung der Mittellängsachse 24 erstreckt. Wie sich insbesondere Figuren 9 und 10 entnehmen lässt, ist das Befestigungsteil 14 der Ausgleichsvorrichtung 100 ebenfalls durch Federelemente 30 an einer inneren Mantelfläche 32 des Grundteils 12 befestigt.

Die Befestigung erfolgt über den Bodenabschnitt 26 einerseits unmittelbar über den unteren Ringbund 34, sowie andererseits mittelbar über den Ringbundabschnitt 36. Dieser Ringbundabschnitt 36 ist über sich glockenartig nach erstreckende Streben 38 mit dem Bodenabschnitt 26 verbunden. Die Streben 38 sind biegesteif bzw. starr ausgebildet.

Die Federelemente 30 sind in radialer Richtung, d. h. quer zur Mittellängsachse 24 steif, in axialer Richtung, d. h. in Richtung der Mittellängsachse 24 jedoch nachgiebig bzw. elastisch ausgebildet.

Der Befestigungsabschnitt 28 ist mit dem Bodenabschnitt 26 über Stabelemente 40 verbunden. Dazu sind vorzugsweise in der Draufsicht gemäß Figur 7 sechs Stabelemente 40 gleichmäßig in einem Winkel von etwa 60° zueinander verteilt angeordnet. Die Stabelemente 40 sind in axialer Richtung steif, in radialer Richtung jedoch biegeweich ausgebildet.

Zwischen dem Bodenabschnitt 26 und dem Befestigungsabschnitt 28 weist das Befestigungsteil 14 der Ausgleichsvorrichtung 100 ein Druckkissen 58 auf. Dieses Druckkissen ist mit dem Druckluftanschluss 50, welcher über die Ausnehmung 48 der Mantelfläche 20 zugänglich ist, pneumatisch mit dem Druckkissen 58 verbunden. Das Druckkissen 58 weist nach axial oben und nach axial unten konzentrisch angeordnete, konisch ausgebildete Sperrabschnitte 60 auf. Das Druckkissen 58 ist dabei im Bereich zwischen der Druckkissenmantelfläche 62 und den Sperrabschnitten 60 zumindest bereichsweise nachgiebig ausgebildet. Am Bodenabschnitt 26, sowie am Befestigungsabschnitt 28 sind konzentrisch jeweils hin zum Druckkissen 58 gerichtete, mit den Sperrabschnitten 60 korrespondierende, als konische Ausnehmung ausgebildete Gegensperrabschnitte 66 vorgesehen.

Bei Einsatz der Ausgleichsvorrichtung 100 beispielsweise an einen Industrieroboter, d. h. wenn die Ausgleichsvorrichtung 100 mit dem Boden 22 an einem Roboterflansch eines Roboterarms befestigt ist und wenn der Bodenabschnitt 26 an einem Aktuator, beispielsweise einem Robotergreifer befestigt ist, ergeben sich analog zu der Ausgleichsvorrichtung 10 gemäß Figuren 1 bis 5 verschiedene Freiheitsgrade. Einerseits kann das Befestigungsteil 14 gegenüber dem Grundteil 12 mittels der Federelemente 30 in axialer Richtung entlang der Mittellängsachse 24 verlagert werden. Eine Begrenzung der Verlagerung nach unten erfolgt lediglich durch den unteren Ringbund 34, welcher gegenüber dem Boden 22 als Anschlag wirkt. Aufgrund der in radialer Richtung steifen Federelemente 30 kann das Befestigungsteil gegenüber dem Grundteil nicht in radialer Richtung verlagert werden. Jedoch ermöglichen die in radialer Richtung nachgiebigen, jedoch in axialer Richtung steifen Stabelemente 40 eine Verlagerung des Bodenabschnitts 26 gegenüber dem Grundteil 12. Somit kann auch mit der Ausgleichsvorrichtung 100 ein Ausgleich in x, y und z-Richtung gewährleistet werden.

Wenn nun bei einer am Druckluftanschluss 50 angeschlossenen, ebenfalls nicht dargestellten Druckluftleitung das Druckkissen 58 mit Druckluft beaufschlagt wird, dehnt sich das Druckkissen 58 in Richtung des Doppelpfeils 64 aus. Dabei werden die am Druckkissen 58 vorgesehenen Sperrabschnitte 60 ebenfalls in Richtung des Doppelpfeils 64 verlagert und rücken einerseits am Bodenabschnitt 26 und andererseits am Befestigungsabschnitt 28 angeordnete Gegensperrabschnitte 66 ein. Die Sperrabschnitte 60 sowie die Gegensperrabschnitte 66 sind konisch ausgebildet und ermöglichen somit eine Zentrierung der Sperrabschnitte 60 in den Gegensperrabschnitten 66. Insgesamt ergibt sich bei mit Druckluft beaufschlagtem Druckkissen 58 eine Versteifung des gesamten Befestigungsteils 14, d. h. der Befestigungsabschnitt 28 kann gegenüber dem Bodenabschnitt 26 auch in radialer Richtung trotz der radialen Nachgiebigkeit der Stabelemente 40 nicht mehr verlagert werden. Die Ausgleichsvorrichtung 100 ist folglich bei mit Druckluft beaufschlagten Druckkissen 58 in radialer Richtung, d. h. quer zur Mittellängsachse 24 versteift. Ein Ausgleich von Ungenauigkeiten kann jedoch weiterhin in axialer Richtung, d. h. in Richtung der Mittellängsachse 24 erfolgen.

Insgesamt kann sowohl mit der Ausgleichsvorrichtung 10 als auch mit der Ausgleichsvorrichtung 100 eine einerseits teilweise nachgiebige Verbindung eines Roboterarmes mit einem Aktuator ermöglicht werden, wobei andererseits bei Beaufschlagung der Vorrichtungen 10, 100 mit Druckluft die Vorrichtungen 10, 100 teilweise arretiert werden können.

## Patentansprüche

1. Ausgleichsvorrichtung (10, 100), insbesondere Ausgleichseinheit zur Anordnung zwischen einem Roboterflansch und einem Aktuator, mit einem Grundteil (12) und mit einem Befestigungsteil (14), wobei das Befestigungsteil (14) in Bezug auf das Grundteil (12) in Richtung einer Mittellängsachse (24) der Vorrichtung (10, 100) axial verlagerbar ist und wobei das Befestigungsteil (14) einen Bodenabschnitt (26) und einen Befestigungsabschnitt (28) aufweist, wobei der Befestigungsabschnitt (28) derart mit dem Bodenabschnitt (26) verbunden ist, dass der Befestigungsabschnitt (28) in Bezug auf das Grundteil (12) senkrecht zur Mittellängsachse (24) der Vorrichtung (10, 100) radial verlagerbar ist, wobei am Befestigungsteil (14) wenigstens ein mit Druck, insbesondere mit Druckluft beaufschlagbarer Druckraum (42, 58) derart vorgesehen ist, dass der Befestigungsabschnitt (28) bei mit Druck beaufschlagtem Druckraum (42, 58) in Bezug auf das Grundteil (12) senkrecht zur Mittellängsachse (24) der Vorrichtung (10, 100) radial arretiert ist, **dadurch gekennzeichnet, dass** Sperrabschnitte (44, 60) jeweils auf der dem Druckraum (42, 58) abgewandten Seite eines den Druckraum (42, 58)begrenzenden Wandungsabschnitts angeordnet sind, wobei die Sperrabschnitte (44, 60) bei mit Druck beaufschlagtem Druckraum (42, 58) in mit den Sperrabschnitten (44, 60) korrespondierende Gegensperrabschnitte (46, 66) einrücken.

2. Vorrichtung (10, 100) nach Anspruch 1, **dadurch gekennzeichnet, dass** die Sperrabschnitte (44, 60) zumindest bereichsweise konisch ausgebildet sind und dass die Gegensperrabschnitte (46, 66) zumindest bereichsweise konisch ausgebildet sind.

3. Vorrichtung (10) nach einem der vorhergehenden Ansprüche, **dadurch gekennzeichnet, dass** die Gegensperrabschnitte (46) am Grundteil (12) angeordnet sind.

4. Vorrichtung (10) nach Anspruch 3, **dadurch gekennzeichnet, dass** als Druckraum (42) mehrere, vorzugsweise drei radial nach außen angeordnete und radial nach außen wirkende Faltenbalgelemente (42) vorgesehen sind.

5. Vorrichtung (10) nach einem der vorhergehenden Ansprüche, **dadurch gekennzeichnet, dass** koaxial zur Mittellängsachse (24) eine kreiszylindrische Ausnehmung (16) im Grundteil (12) und im Befestigungsteil (14) vorgesehen ist.

6. Vorrichtung (100) nach einem der vorhergehenden Ansprüche, **dadurch gekennzeichnet, dass** die Gegensperrabschnitte (66) jeweils auf der dem Druckraum (58) zugewandten Seite am Bodenabschnitt (26) und am Befestigungsabschnitt (28) angeordnet sind.

7. Vorrichtung (100) nach Anspruch 6, **dadurch gekennzeichnet, dass** als Druckraum (58) ein im Befestigungsteil (14) zwischen Bodenabschnitt (26) und Befestigungsabschnitt (28) angeordnetes, in axialer Richtung wirkendes Druckkissen (58) vorgesehen ist.

8. Vorrichtung (10, 100) nach einem der vorhergehenden Ansprüche, **dadurch gekennzeichnet, dass** das Befestigungsteil (14) mittels sich radial nach außen erstreckender Federelemente (30) mit dem Grundteil (12) verbunden ist.

9. Vorrichtung (10, 100) nach einem der vorhergehenden Ansprüche, **dadurch gekennzeichnet, dass** die Federelemente (30) unmittelbar mit dem Bodenabschnitt (26) und im Bereich des Befestigungsabschnitts (28) mittelbar durch einen konzentrisch zur Mittellängsachse (24) der Vorrichtung (10, 100) mit dem Bodenabschnitt (26) verbundenen Ringbundabschnitt (36) mit dem Bodenabschnitt (26) verbunden sind.

10. Vorrichtung (10, 100) nach Anspruch 8, **dadurch gekennzeichnet, dass** der Bodenabschnitt (26) mit dem Befestigungsabschnitt (28) durch mehrere, vorzugsweise wenigstens drei, weiter vorzugsweise durch sechs in axialer Richtung zwischen dem Bodenabschnitt (26) und dem Befestigungsabschnitt (28) verlaufende Stabelemente (40) verbunden ist.

11. Vorrichtung (10, 100) nach Anspruch 10, **dadurch gekennzeichnet, dass** die Stabelemente (40) in radialer Richtung zumindest bereichsweise biegeweich ausgebildet sind.

12. Vorrichtung (10) nach einem der vorhergehenden Ansprüche, **dadurch gekennzeichnet, dass** am Grundteil (12) sich nach radial innen erstreckende, den Bodenabschnitt (26) zumindest bereichsweise hintergreifende Vorsprünge (54) angeordnet sind.

13. Vorrichtung (10, 100) nach einem der vorhergehenden Ansprüche, **dadurch gekennzeichnet, dass** der Druckraum (42, 58) mit einem am Befestigungsteil (14) angeordneten, von einer Mantelfläche (20) des Grundteils (12) zugänglichen Druckluftanschluss (50) pneumatisch verbunden ist.

14. Vorrichtung (10, 100) nach einem der vorhergehenden Ansprüche, **dadurch gekennzeichnet, dass** die Vorrichtung (10, 100) einstückig hergestellt ist und insbesondere mittels eines generativen Fertigungsverfahrens hergestellt ist.

## Claims

1. Compensation device (10, 100), in particular a compensation device for being arranged between a robot flange and an actuator, comprising a main part (12) and a fastening part (14), the fastening part (14) being axially movable relative to the main part (12) in the direction of a central longitudinal axis (24) of the device (10, 100), and the fastening part (14) comprising a base portion (26) and a fastening portion (28), the fastening portion (28) being connected to the base portion (26) in such a way that the fastening portion (28) is radially movable relative to the main part (12) perpendicularly to the central longitudinal axis (24) of the device (10, 100), at least one pressure chamber (42, 58) to which pressure, in particular compressed air, can be supplied being provided on the fastening part (14) in such a way that, when pressure is supplied to the pressure chamber (42, 58), the fastening portion (28) is radially blocked with respect to the main part (12) perpendicularly to the central longitudinal axis (24) of the device (10, 100), **characterized in that** blocking portions (44, 60) are arranged in each case on the side of a wall portion delimiting the pressure chamber (42, 58) that faces away from the pressure chamber (42, 58), the blocking portions (44, 60) engaging with mating blocking portions (46, 66) corresponding to the blocking portions (44, 60) when pressure is supplied to the pressure chamber (42, 58).

2. Device (10, 100) according to claim 1, **characterized in that** the blocking portions (44, 60) are conical at least in regions, and **in that** the mating blocking portions (46, 66) are conical at least in regions.

3. Device (10) according to one of the preceding claims, **characterized in that** the mating blocking portions (46) are arranged on the main part (12).

4. Device (10) according to claim 3, **characterized in that** a plurality of, preferably three, bellow elements (42) which are arranged radially outwards and act radially outwards are provided as the pressure chamber (42).

5. Device (10) according to any of the preceding clams, **characterized in that** a circular-cylindrical recess (16) is provided in the main part (12) and in the fastening part (14), coaxially to the central longitudinal axis (24).

6. Device (100) according to any of the preceding claims, **characterized in that** the mating blocking portions (66) are arranged on the base portion (26) and on the fastening portion (28), in each case on the side facing the pressure chamber (58).

7. Device (100) according to claim 6, **characterized in that** a pressure pad (58) which is arranged in the fastening part (14) between the base portion (26) and the fastening portion (28) and acts in the axial direction is provided as the pressure chamber (58).

8. Device (10, 100) according to any of the preceding claims, **characterized in that** the fastening part (14) is connected to the main part (12) by means of spring elements (30) which extend radially outwards.

9. Device (10, 100) according to any of the preceding claims, **characterized in that** the spring elements (30) are directly connected to the base portion (26) and, in the region of the fastening portion (28), are indirectly connected to the base portion (26) by an annular collar portion (36) that is concentric to the central longitudinal axis (24) of the device (10, 100) and is connected to the base portion (26).

10. Device (10, 100) according to claim 8, **characterized in that** the base portion (26) is connected to the fastening portion (28) by a plurality of, preferably at least three, more preferably six, rod elements (40) which extend in the axial direction between the base portion (26) and the fastening portion (28).

11. Device (10, 100) according to claim 10, **characterized in that** the rod elements (40) are designed to be flexible, at least in regions, in the radial direction.

12. Device (10) according to any of the preceding claims, **characterized in that** projections (54) which extend radially inwards and engage the base portion (26) from behind, at least in regions, are arranged on the main part (12).

13. Device (10, 100) according to any of the preceding claims, **characterized in that** the pressure chamber (42, 58) is pneumatically connected to a compressed-air connection (50) which is arranged on the fastening part (14) and is accessible from a lateral surface (20) of the main part (12).

14. Device (10, 100) according to any of the preceding claims, **characterized in that** the device (10, 100) is produced in one piece and in particular is produced by means of a generative manufacturing process.

## Revendications

1. Dispositif de compensation (10, 100), en particulier unité de compensation destinée à être agencée entre une bride de robot et un actionneur, comprenant une partie de base (12) et une partie de fixation (14), dans lequel la partie de fixation (14) est déplaçable axialement par rapport à la partie de base (12) en direction d'un axe longitudinal médian (24) du dispositif (10, 100), et dans lequel la partie de fixation (14) présente une section de fond (26) et une section de fixation (28), dans lequel la section de fixation (28) est reliée à la section de fond (26) de telle sorte que la section de fixation (28) est déplaçable radialement par rapport à la partie de base (12) perpendiculairement à l'axe longitudinal médian (24) du dispositif (10, 100), dans lequel au moins une chambre de pression (42, 58) pouvant être soumise à l'effet d'une pression, en particulier à l'effet d'un air comprimé, est prévue sur la partie de fixation (14), de telle manière que la section de fixation (28), lorsque la chambre de pression (42, 58) est soumise à l'effet d'une pression, est bloquée radialement perpendiculairement à l'axe longitudinal médian (24) du dispositif (10, 100) par rapport à la partie de base (12), **caractérisé en ce que** des sections de blocage (44, 60) sont agencées respectivement sur la face d'une section de paroi délimitant la chambre de pression (42, 58), laquelle face est opposée à la chambre de pression (42, 58), dans lequel les sections de blocage (44, 60), lorsque la chambre de pression (42, 58) est soumise à l'effet d'une pression, s'enclenchent dans des sections de blocage complémentaires (46, 66) correspondant aux sections de blocage (44, 60).

2. Dispositif (10, 100) selon la revendication 1, **caractérisé en ce que** les sections de blocage (44, 60) sont coniques au moins par endroits et **en ce que** les sections de blocage complémentaires (46, 66) sont coniques au moins par endroits.

3. Dispositif (10) selon l'une quelconque des revendications précédentes, **caractérisé en ce que** les sections de blocage complémentaires (46) sont agencées sur la partie de base (12).

4. Dispositif (10) selon la revendication 3, **caractérisé en ce que** plusieurs, de préférence trois éléments soufflets (42) agencés radialement vers l'extérieur et opérant radialement vers l'extérieur servent de chambre de pression (42).

5. Dispositif (10) selon l'une quelconque des revendications précédentes, **caractérisé en ce qu'**un évidement (16) cylindrique circulaire est ménagé dans la partie de base (12) et dans la partie de fixation (14) de manière coaxiale par rapport à l'axe longitudinal médian (24).

6. Dispositif (100) selon l'une quelconque des revendications précédentes, **caractérisé en ce que** les sections de blocage complémentaires (66) sont agencées sur la section de fond (26) et sur la section de fixation (28) respectivement sur la face tournée vers la chambre de pression (58).

7. Dispositif (100) selon la revendication 6, **caractérisé en ce qu'**un coussin de pression (58) opérant dans le sens axial et agencé dans la partie de fixation (14) entre la section de fond (26) et la section de fixation (28) sert de chambre de pression (58) .

8. Dispositif (10, 100) selon l'une quelconque des revendications précédentes, **caractérisé en ce que** la partie de fixation (14) est reliée à la partie de base (12) au moyen d'éléments ressort (30) s'étendant radialement vers l'extérieur.

9. Dispositif (10, 100) selon l'une quelconque des revendications précédentes, **caractérisé en ce que** les éléments ressort (30) sont reliés à la section de fond (26) de façon directe, et, dans la zone de la section de fixation (28), de façon indirecte par l'intermédiaire d'une section de collet annulaire (36) reliée à la section de fond (26) de manière concentrique par rapport à l'axe longitudinal médian (24) du dispositif (10, 100).

10. Dispositif (10, 100) selon la revendication 8,
**caractérisé en ce que** la section de fond (26) est reliée à la section de fixation (28) par plusieurs, de préférence au moins trois, mieux encore par six éléments barres (40) s'étendant dans le sens axial entre la section de fond (26) et la section de fixation (28) .

11. Dispositif (10, 100) selon la revendication 10, **caractérisé en ce que** les éléments barres (40) sont souples en flexion au moins par endroits dans le sens radial.

12. Dispositif (10) selon l'une quelconque des revendications précédentes, **caractérisé en ce que** des parties saillantes (54) s'étendant radialement vers l'intérieur et venant se plaquer au moins par endroits derrière la section de fond (26) sont agencées sur la partie de base (12).

13. Dispositif (10, 100) selon l'une quelconque des revendications précédentes, **caractérisé en ce que** la chambre de pression (42, 58) est reliée de manière pneumatique à une alimentation en air comprimé (50) agencée sur la partie de fixation (14) et accessible par une surface extérieure (20) de la partie de base (12) .

14. Dispositif (10, 100) selon l'une quelconque des revendications précédentes, **caractérisé en ce que** le dispositif (10, 100) est fabriqué d'une seule pièce et est fabriqué en particulier au moyen d'un procédé de fabrication additive.
